# EUROPÄISCHE PATENTSCHRIFT

(11) **EP 3 807 632 B1**
(45) Veröffentlichungstag und Bekanntmachung des Hinweises auf die Patenterteilung: **10.01.2024**
(21) Anmeldenummer: 19731594.8
(22) Anmeldetag: 23.05.2019
(51) Int. Cl.: G01N 29/24, B06B 3/00, G01N 29/26, G01N 29/28, G01N 29/34, G10K 11/22, B06B 1/06, G01S 7/521, G01S 15/42

(54) **1D-ULTRASCHALLWANDLER-EINHEIT**
1D ULTRASONIC CONVERTER UNIT
UNITÉ À TRANSDUCTEURS ULTRASONORES 1D

(30) Priorität: 13.07.2018 DE 102018005540
(43) Veröffentlichungstag der Anmeldung: 21.04.2021
(73) Patentinhaber: Pepperl+Fuchs SE, 68307 Mannheim (DE)
(72) Erfinder: KAINDL, Thomas, 69221 Dossenheim (DE); AUGENSTEIN, Regine, 68167 Mannheim (DE); KUPNIK, Mario, 64285 Darmstadt (DE); JÄGER, Axel, 85055 Ingolstadt (DE); RUTSCH, Matthias, 64283 Darmstadt (DE)
(74) Vertreter: Koch Müller Patentanwaltsgesellschaft mbH
(86) Internationale Anmeldenummer: PCT/EP2019/000162
(87) Internationale Veröffentlichungsnummer: WO 2020/011387

(56) Entgegenhaltungen:
- EP-A1- 0 928 640
- EP-A2- 0 940 801
- KONETZKE ERIC ET AL: "Phased array transducer for emitting 40-kHz air-coupled ultrasound without grating lobes", 2015 IEEE INTERNATIONAL ULTRASONICS SYMPOSIUM (IUS), IEEE, 21. Oktober 2015 (2015-10-21), Seiten 1-4, XP032799399, DOI: 10.1109/ULTSYM.2015.0019 [gefunden am 2015-11-13]
- TAKAYUKI TAKAHASHI ET AL: "Ultrasonic phased array sensor for electric travel aids for visually impaired people", PROCEEDINGS OF THE SPIE - THE INTERNATIONAL SOCIETY FOR OPTICAL ENGINEERING SPIE - VERTICAL-CAVITY SURFACE-EMITTING LASERS XIII, Bd. 6794, 3. Dezember 2007 (2007-12-03), Seite 67943V, XP055619716, SPIE OPTO: INTEGRATED OPTOELECTRONIC DEVICES24-29 January 2009San Jose, California, United States ISSN: 0277-786X, DOI: 10.1117/12.783988
- JAGER AXEL ET AL: "Air-coupled 40-KHZ ultrasonic 2D-phased array based on a 3D-printed waveguide structure", 2017 IEEE INTERNATIONAL ULTRASONICS SYMPOSIUM (IUS), IEEE, 6. September 2017 (2017-09-06), Seiten 1-4, XP033245009, DOI: 10.1109/ULTSYM.2017.8091892 [gefunden am 2017-10-31]
- Manufacturing Murata: "Ultrasonic Sensor Application Manual Cat. No. S15E-5", , 1. Januar 2009 (2009-01-01), XP055620003, Internet Gefunden im Internet: URL:https://cdn-reichelt.de/documents/date nblatt/B400/ULTRASCHALL%20SENSOR.pdf [gefunden am 2019-09-09]

## Beschreibung

Die Erfindung betrifft eine 1D-Ultraschallwandler-Einheit mit mindestens drei diskreten und einzeln ansteuerbaren Ultraschallwandlern zur Erfassung von Objekten, Konturen oder Abständen,

Ultraschall bzw. Ultraschallwandler werden in den unterschiedlichsten Messanordnungen verwendet. Je nach Anwendung wird der Ultraschall in ein flüssiges oder gasförmiges Medium ausgekoppelt.

Aus der WO 2008/135 004 A1 ist ein Ultraschallwandler-Array für die Anwendung in gasförmigen Medien bekannt. Das Array weist einen Schichtaufbau aus einer Schicht aus einem Elektret zwischen zwei Elektrodenstrukturen auf, wobei die eine Elektrodenstruktur mehrere unabhängig adressierbare Elektrodenelemente umfasst, wodurch lokale Dickenschwingungen der Elektretschicht erzeugt werden.

Ein 1,5D Array von Ultraschallwandlern mit verbesserter Nahefeldauflösung ist aus der US 2013/0283918 A1 bekannt. In der US 2014/0283611 A1 und der US 6,310,831 B1 sind phasengesteuerte Ultraschallwandler-Arrays und adaptive bzw. kompensierende Steuerungsverfahren beschrieben.

Weitere Ultraschallwandler sind aus der EP 0 928 640 A1, der EP 0 940 801 A2 sowie aus "Phased array transducer for emitting 40 kHz air-coupled ultrasound without grating lobes", Eric Konetzke et al., IEEE International Ultra-sonic Symposium, 2015, S. 1-4 und aus "Air-coupled 40-kHz ult-rasonic 2D-phased array based on a 3D-printed waveguide structure", Jäger et al., IEEE International Ultrasonic Symposium, 2017, S. 1-4, und aus "Takahashi et al., Ultrasonic phased array sensor for electrical travel aids for visually impaired people, Proceedings of the spie -The international society for optical engineering spie - vertical-cavity surface-emitting lasers XIII, Bd. 6794, 3. Dezember 2007, Seite 67943V, ISSN: 0277-786X" und aus "Manufacturing Murata: Ultrasonic Sensor Application Manual Cat. No. S15E-5, 1. Januar 2009, URL:https://cdn-reichelt.de/ documents/datenblatt/8400/ultraschall%20sensor.pdf, Seite 3" bekannt.

Für den Einsatz in einer industriellen Umgebung müssen die eingesetzten Ultraschallwandler eine Temperaturstabilität der Messung von -40°C bis teileweise über +100°C und eine elektromagnetische Verträglichkeit mit anderen technischen Geräten gewährleisten können. Außerdem müssen die Ultraschallwandler gegenüber harschen Umwelteinflüssen, wie z.B. Staub, Nässe, aggressiven Chemikalien, sowie gegenüber mechanischen Schlägen oder gegenüber mechanischem Kratzen robust sein.

Um hohe Detektionsreichweiten zu erzielen, werden piezoelektrische Keramiken, wie z.B. Blei-Zirkonat-Titanat (PZT) eingesetzt, die im Vergleich zu anderen piezoelektrischen Materialien, wie Quarz, Elektrete oder PVFD, hohe Kopplungsfaktoren besitzen. Der Kopplungsfaktor stellt dabei ein Maß für die Umwandlungseffizienz zwischen mechanisch und elektrischer gespeicherter Energie dar. Diese liegen für PZT je nach Anregungsrichtung beispielhaft im Bereich von 0,3 bis ca. 0,75.

Je nach Polarisationsrichtung des piezoelektrischen Materials können mit Hilfe von Wechselspannungen resonante mechanische Schwingungen im piezoelektrischen Körper erzeugt werden, die je nach geometrischer Ausbreitung als Planar-, Dicken- oder Scheerschwingung bezeichnet werden. Für die unterschiedlichen Schwingungsformen lassen sich aus der materialspezifischen Frequenzkonstanten typische Abmessungen des piezoelektrischen Körpers abschätzen, die für eine resonante Schwingung bei einer vorgegebenen Frequenz notwendig sind.

Die Frequenzkonstanten liegen für PZT je nach Schwingungsart typischerweise zwischen 1300 kHz▪mm bis 2600 kHz-mm.

Eine dünne Scheibe aus für Sensorik geeignetem PZT besitzt demnach für Anregungsfrequenzen von 20 kHz bis 500 kHz im Planarmodus einen Durchmesser von ca. 4 mm bis 100 mm. Aufgrund der kapazitativen Eigenschaften einer solchen dünnen Scheibe lassen sich bei entsprechender Polarisation niedrige Anregungsspannungen gut umsetzen.

Größere Dicken der Piezoscheibe sind nicht erstrebenswert. Einerseits müssen mit zunehmender Dicke des piezoelektrischen Materials für denselben Frequenzbereich höhere Spannungen, schnell auch im kV-Bereich, aufgebracht werden, was einen höheren Sicherheitsaufwand bedeutet. Andererseits verändert sich mit der Dicke des piezoelektrischen Körpers auch dessen Steifigkeit, was direkte Auswirkungen auf den Empfangsfall von Schallwellen hat.

Bei einer Anwendung von mehreren Ultraschallwandlern in eine phasengesteuerten mindestens eindimensionalen Array (phased array) ist weiterhin zu beachten, dass die Abstände zwischen benachbarten Ultraschallwandlern nicht größer als die Wellenlänge der Ultraschallwelle oder bevorzugt nicht größer als die halbe Wellenlänge sein dürfen.

Durch die Abstandsbedingung wird die Baugröße der einzelnen Wandler bzw. die mit einer bestimmten Bauform/Größe der Ultraschallwandler möglichen Frequenzbereiche beschränkt.

Für einen Frequenzbereich zwischen 20 kHz und 500 kHz und eine Auskopplung in Luft ergibt sich beispielsweise ein maximaler Abstand zwischen benachbarten Wandlern in der Größenordnung von ca. 8.5 mm bis ca. 0.3 mm.

Der vorher beschriebene Wandler mit einer dünnen Scheibe aus für Sensorik geeignetem PZT weist jedoch schon aufgrund des Piezoscheibendurchmessers eine im Schnitt um mehr als 10 Mal größeren Durchmesser auf.

Vor diesem Hintergrund besteht die Aufgabe der Erfindung darin, eine Vorrichtung anzugeben, die den Stand der Technik weiterbildet.

Die Aufgabe wird durch eine 1D-Ultraschallwandler-Einheit mit den Merkmalen des Patentanspruchs 1 gelöst. Vorteilhafte Ausgestaltungen der Erfindung sind Gegenstand von Unteransprüchen.

Gemäß dem Gegenstand der Erfindung wird eine 1D-Ultraschallwandler-Einheit bereitgestellt.

Die 1D-Ultraschallwandler-Einheit umfasst mindestens drei Ultraschallwandler zur Erfassung von Objekten, Konturen oder Abständen, beispielsweise in einem Abstand von 0,5 m und mehr, und eine Steuereinheit.

Die Steuereinheit ist dazu ausgelegt, jeden Ultraschallwandler einzeln anzusteuern.

Die Ultraschallwandler sind in einer gemeinsamen Trägerstruktur eingelassen, wobei jeder Ultraschallwandler jeweils ein Gehäuse, einen in dem Gehäuse angeordneten piezoelektrischen Körper und eine an einem offenen Ende des Gehäuses angeordnete Schallauskoppelschicht, z.B. eine entsprechend angeordnete Oberfläche des piezoelektrischen Körpers, zum Auskoppeln von Schallwellen in ein gasförmiges Medium aufweist.

Jeder Ultraschallwandler ist dazu ausgelegt, dieselbe Frequenz abzustrahlen und / oder zu empfangen, wobei die Frequenz in einem Bereich von 20 kHz bis 400 kHz liegt.

Jeweils zwei unmittelbar zueinander benachbarte Ultraschallwandler weisen einen Abstand von Mitte der Schallauskoppelschicht zu Mitte der Schallauskoppelschicht von höchstens 10 cm oder höchstens 5 cm oder höchstens 2 cm auf.

Die 1D-Ultraschallwandler-Einheit weist außerdem pro Ultraschallwandler einen Schallkanal auf, wobei jeder Schallkanal eine Eingangsöffnung mit einer ersten Querschnittsfläche und eine Ausgangsöffnung mit einer zweiten Querschnittsfläche aufweist und jeder Schallauskoppelschicht genau eine Eingangsöffnung zugeordnet ist.

Die Ausgangsöffnungen aller Schallkanäle sind entlang einer Linie angeordnet und ein Abstand von der Mitte einer der Ausgangsöffnungen zu der Mitte einer unmittelbar benachbarten Ausgangsöffnung beträgt höchstens die Wellenlänge der Schallfrequenz oder höchstens die Hälfte der Wellenlänge der Schallfrequenz, wobei der Abstand zwischen unmittelbar benachbarten Ausgangsöffnungen kleiner als der Abstand der entsprechenden Eingangsöffnungen ist.

Ein Quotient aus einem Flächeninhalt einer Querschnittfläche der Ausgangsöffnung zu einem Flächeninhalt der Eingangsöffnung einen Wert zwischen oder 0,30 und 1,2 oder 0,35 und 1,0 oder 0,4 und 0,8 aufweist.

Es versteht sich, dass es sich bei den Ultraschallwandlern der 1D-Ultraschallwandler-Einheit um einzelnen diskrete Bauteile handelt, wobei jeder Ultraschallwandler durch einsetzen in die Trägerstruktur, z.B. ein Gehäuse eine feste Position und damit auch feste Abstände zu allen weiteren Ultraschallwandlern aufweist.

Hierbei sind zwei nebeneinander angeordnete Ultraschallwandler, zwischen denen kein weiterer Ultraschallwandler angeordnet ist, zueinander unmittelbar benachbart.

Es versteht sich auch, dass die einzelnen Schallkanäle rohrartig oder stangenförmig ausgebildet sind, wobei sich beispielsweise der Rohrdurchmesser verringert und/oder die Form der Querschnittsfläche verändert und/oder der Verlauf des Kanals bogenförmig oder s-förmig ausgebildet ist.

Vorteilhafterweise weisen die Schallkanäle zwischen der Schallauskopplungsschicht und der Ausgangsöffnung glatte Innenwände und insbesondere keine Kanten auf.

Mit den mehreren einzeln ansteuerbaren Ultraschallwandlern lassen sich durch zeitlich versetzte bzw. phasenversetzte Ansteuerung Wellenfronten mit einstellbarer Hauptausbreitungsrichtung erzeugen.

Durch Anordnen von Schallkanälen vor den einzelnen Ultraschallwandlern werden die einzelnen Schallquellen bei Überlagerung bzw. für das Überlagern zu einer gemeinsamen Wellenfront an die jeweiligen Enden bzw. die Ausgangsöffnungen der Schallkanäle verlegt.

Hierdurch wird es möglich, die Abstände zwischen den Schallquellen im Vergleich zu den Abständen zwischen den einzelnen Wandlern zu verringern, insbesondere die Abstände zwischen den einzelnen Schallquellen unabhängig von der Größe, z.B. dem Durchmesser, der einzelnen Ultraschallwandler bzw. unabhängig von den Abständen zwischen den einzelnen Ultraschallwandlern einzustellen.

Ein Vorteil der Erfindung ist somit, dass die abstrahlende Apertur eines piezoelektrischen Wandlers, z.B. eine kreisförmige Apertur mit einem durch den piezoelektrischen Körper vorgegebenen Durchmesser, mittels der Schallkanäle so verändert wird, dass sie in mindestens einer Dimension den Bedingungen einer gewünschten Array-Anordnung genügen und die Ausbildung eine phased Array Vorrichtung ausbilden lässt.

Insbesondere lässt sich mit einer großen Ausgangsfläche der jeweiligen Schallkanäle d.h. mit einem Quotienten von größer 0.3 der Schalldruck und somit die Detektionsreichte der Anordnung im Vergleich zu der Detektionsreichweite eines einzelnen Ultraschallwandlers nahezu erhalten. Bei kleineren Quotienten oder Flächenverkleinerung in beiden Dimensionen reduziert sich die Reichweite der Vorrichtung in Vergleich zu der Detektionsreichweite eines einzelnen Ultraschallwandlers.

Insbesondere lassen sich im Unterscheid zu MEMS basierten Ultraschallwandlern wesentlich größere Leistungen erzielen und hierdurch insbesondere auch Objekte oder Strukturen in Entfernungen oberhalb von 0,5 m zuverlässig detektieren.

Der Verlauf des Schallkanals und die Dimensionierung der Ausgangsöffnung ermöglichen es zudem die Wellenfront in einer Dimension zu lenken und die Ausdehnung der Wellenfront in der anderen, dazu orthogonalen Dimension räumlich zu fokussieren.

Überraschender Weise hat sich gezeigt, dass die Fokussierung in der orthogonalen Dimension mit ausschließlich einem 1-dimensionalen Schallwandler und dazugehörigem Schallkanal erreicht wird.

Ein Lösungsansatz mit mehrdimensionalen Arrayanordnungen würde hier erheblich mehr Ultraschallwandler und zusätzliche Komplexität bei der Steuereinheit benötigen. Die Zuverlässigkeit ist bei einem mehrdimensionalen Schallwandler wesentlich geringer.

Gleiches gilt umgekehrt auch für die Empfangsempfindlichkeit des beschriebenen Array Sensorsystems. Durch den Erhalt der Empfangsfläche von mindestens dem 0.3 fachen der Ultraschallwandlereingangsfläche wird die Empfangsempfindlichkeit aufrechterhalten.

Ein Vorteil der erfinderischen Lösung besteht darin, dass das beschrieben Sensorsystem in diesem Frequenzbereich unter Arraybedingungen in einem gasförmigen Medium sowohl senden, als auch empfangen kann.

Insbesondere lassen sich aktuelle MEMS-Strukturen in Zusammenhang mit gasförmigen Medien nur als Mikrophone einsetzen.

Bei einem Gehäusedurchmesser der einzelnen Ultraschallwandler von beispielsweise 7 mm beträgt der Abstand zweier Wandler allerdings mindestens 14 mm.

Ohne Schallkanal sind daher nur Wellenfronten mit Frequenzen bis höchstens 22 kHz (λ ≥ 14mm) bzw. bis höchstens 11 kHz (λ/2 ≥ 14mm) realisierbar.

Das Erzeugen von Wellenfronten mit höheren Frequenzen, also kleineren Wellenlängen, ist mit denselben Ultraschallwandlern erst mit Hilfe der erfindungsgemäßen Schallkanäle möglich, da der Abstand der einzelnen "Schallquellen" bei der Überlagerung nicht durch die Größe der Wandlergehäuse, sondern nur noch durch die Größe und den Abstand der Schallkanalausgangsöffnungen bestimmt wird.

Durch die Schallkanäle wird außerdem eine präzise, gerichtete Detektion sichergestellt.

Ein weiterer Vorteil ist, dass sich insbesondere zuverlässige, gehäuste, diskrete Ultraschallwandler mit einer gewissen Größe in einem phasengesteuerten Array zur Detektion von zu den Sensoren beabstandeten Objekten in gasförmigen Medien, wie Luft, einzusetzen lassen.

Gemäß einer Weiterbildung weist der Quotient zwischen dem Flächeninhalt der zweiten Querschnittsfläche und dem Flächeninhalt der ersten Querschnittsfläche einen Wert zwischen 0,35 und 1,0 oder zwischen 0,40 und 0,8 auf.

Der Flächeninhalt der Eingangsfläche im Verhältnis zu dem Flächeninhalt der Austrittsfläche des Schallkanals lässt sich vergrößern oder verkleinern oder erhalten, wobei in allen Ausführungsformen eine Verringerung zumindest der Breite der Ausgangsöffnung im Vergleich zu der Breite der Eingangsöffnung durchgeführt wird.

Gemäß einer weiteren Ausführungsform beträgt eine Länge von der Schallauskoppelschicht jedes Ultraschallwandlers zu der Ausgangsöffnung des zugeordneten Schallkanals ein ganzzahliges Vielfaches eines Achtels der Wellenlänge der Schallfrequenz oder ein ganzzahliges Vielfachen der halben Wellenlänge der Schallfrequenz.

Gemäß der Erfindung liegen die Ausgangsöffnungen aller Schallkanäle in einer Gemeinsamen planen Ebene oder in einer gekrümmten Fläche. Durch Anordnen in einer gekrümmten Fläche, z.B. einer konkaven Fläche, lassen sich beispielsweise fokussierte Wellenfronten erzeugen.

In einer anderen Ausführungsform besteht jeder Schallkanal aus einem Metall oder einem Kunststoff. Alternativ umfasst jeder Schallkanal ein Metall oder einen Kunststoff.

Gemäß einer weiteren Ausführungsform ragt jeder Ultraschallwandler mit der Schallauskoppelschicht voran in die zugeordnete Eingangsöffnung hinein und in einer Weiterbildung nimmt jeder Schallkanal zumindest einen Teil des zugeordneten Ultraschallwandlers passgenau auf.

Anders ausgedrückt, entspricht eine innere Form der Schallkanäle im Bereich der Eingangsöffnung möglichst genau einer äußeren Form des jeweiligen Ultraschallwandlers.

In einer weiteren Ausführungsform weist das Gehäuse jedes Ultraschallwandlers einen Durchmesser von mindestens 7 mm auf.

Erfindungsgemäß umfasst das Gehäuse jedes Ultraschallwandlers einen zylinderförmigen Metallbecher und weist in einer weiteren Weiterbildung zwischen der Auskoppelschicht und dem Metallbecher eine Schallentkopplungsschicht auf.

Gemäß einer Weiterbildung dieser Ausführungsform spannt eine Oberfläche der Schallauskoppelschicht, ein Rand des Metallbechers und die dazwischen angeordnete Schallentkopplungsschicht jedes einzelnen Ultraschallwandlers jeweils eine plane Ebene auf.

Gemäß der Erfindung weist jeder Ultraschallwandler eine auf einem Referenzpotential liegende elektromagnetische Abschirmung auf. Es versteht sich, dass die elektromagnetische Abschirmung auch vollständig oder zumindest teilweise durch das Gehäuse, insbesondere einen als Gehäuse dienenden Metallbecher ausgebildet sein kann.

Alternativ kann die 1D-Ultraschallwandler-Einheit auch eine gemeinsame Abschirmung für alle Ultraschallwandler aufweisen, z.B. ein gemeinsames Gehäuse.

Das Gehäuse jedes Ultraschallwandlers ist gemäß einer weiteren Ausführungsform mindestens der IP 40 Schutzart entsprechend ausgebildet.

In einer weiteren Ausführungsform weist jeder Schallkanal eine Wandstärke von mindestens 0,5 mm oder mindestens 1 mm auf.

Gemäß einer anderen Weiterbildung weisen jeweils zwei Schallkanäle zueinander über eine gesamte Länge der beiden Schallkanäle einen Abstand von mindestens 0,5 mm oder mindestens 1 mm auf.

In einer anderen Ausführungsform weist die Trägerstruktur umfasst eine erste plane Ebene an einer ersten Stirnseite und eine zweite plane Ebene an einer zweiten Stirnseite der Trägerstruktur auf, wobei die erste Stirnseite parallel zu der zweiten Stirnseite ausgebildet ist.

Hierzu sind die Ultraschallsensoren an den Eingangsöffnungen entlang einer ersten Geraden und die Ausgangsöffnungen der Schallkanale entlang einer zweiten Geraden angeordnet. Vorzugsweise sind die beiden Geraden zueinander parallel ausgebildet. Es versteht sich, dass die Länge der zweiten geraden wesentlich kleiner, ist als die Länge der ersten Geraden. Ein Vorteil ist, dass sich ein Einbau der Trägerstruktur mit zwei parallelen Stirnseiten in einer Aufnahmevorrichtung wesentlich vereinfacht.

Die Erfindung wird nachfolgend unter Bezugnahme auf die Zeichnungen näher erläutert. Hierbei werden gleichartige Teile mit identischen Bezugszeichen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigen, die
- Figur 1: eine Ansicht auf eine erste erfindungsgemäße Ausführungsform einer 1D-Ultraschallwandler-Einheit,
- Figur 2A,B: eine Ansicht auf eine erste erfindungsgemäße Ausführungsform eines einzelnen Ultraschallwandlers,
- Figur 3: eine Ansicht einer zweiten erfindungsgemäßen Ausführungsform der Schallkanälen,
- Figur 4: eine Ansicht einer dritten erfindungsgemäßen Ausführungsform der Schallkanäle,
- Figur 5: eine Ansicht einer weiteren Ausführungsform eines einzelnen Schallkanals,
- Figur 6: eine Ansicht verschiedener Ausführungsformen einer Ausgangsfläche eines Schallkanals.

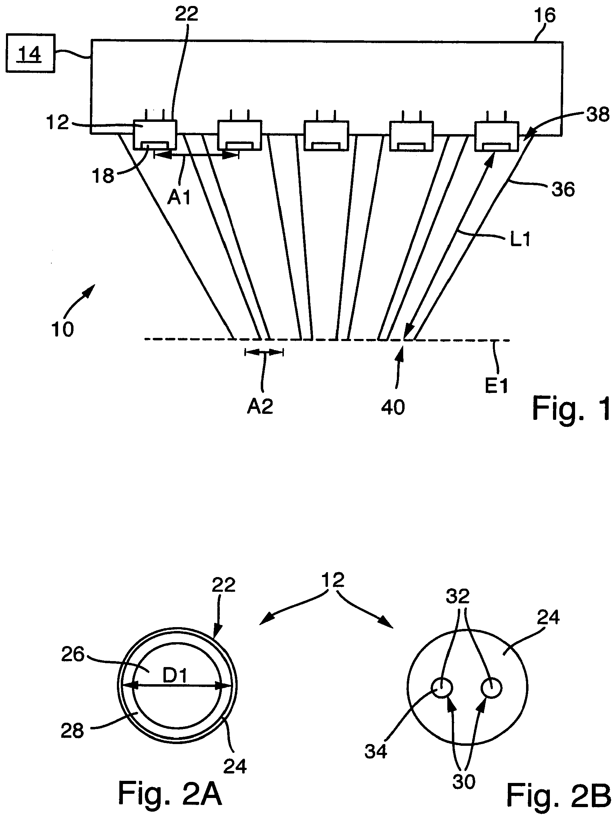

Die Abbildung der Figur 1 zeigt eine Ansicht einer ersten Ausführungsform einer erfindungsgemäßen 1D-Ultraschallwandler-Einheit 10, aufweisend fünf entlang einer Geraden angeordnete Ultraschallwandler 12 zur Erfassung von Objekten, Konturen oder Abständen und eine Steuereinheit 14, wobei die Steuereinheit 14 dazu ausgelegt ist, jeden Ultraschallwandler 12 einzeln anzusteuern.

In den dargestellten Ausführungsbeispiel sind die Ultraschallwandler 12 in gleichmäßigen Abständen A1 in einer gemeinsamen Trägerstruktur 16 eingelassen, wobei jeder Ultraschallwandler einen piezoelektrischen Körper 18, ein den piezoelektrischen Körper 18 umfassendes Gehäuse 22 aufweist. Jeder Ultraschallwandler 12 ist dazu ausgelegt, dieselbe Frequenz abzustrahlen und/oder zu empfangen, wobei die Frequenz in einem Bereich von 20 kHz bis 100 kHz liegt.

In der Abbildung der Figur 2A ist eine Aufsicht auf eine erste erfindungsgemäße Ausführungsform eines der Ultraschallwandler 12 dargestellt. Das Gehäuse 22 jedes Ultraschallwandlers 12 weist einen zylinderförmiger Metallbecher 24 mit einem Außendurchmesser D1 von mindestens 7 mm auf. Das Gehäuse 22 bildet eine auf einem Referenzpotential liegende Abschirmung 20 für den piezoelektrischen Körper 18 aus.

An einem offenen Ende des Metallbechers 24 ist eine Schallauskoppelschicht 26 zum Auskoppeln von Schallwellen in ein gasförmiges Medium angeordnet. Zwischen der Auskoppelschicht 26 und dem Metallbecher 24 ist eine Schallentkopplungsschicht 28 angeordnete.

Eine Oberfläche der Schallauskoppelschicht 26, ein Rand des Metallbechers 24 und die dazwischen angeordnete Schallentkopplungsschicht 28 jedes Ultraschallwandlers 12 liegen jeweils in einer gemeinsamen planen Ebene.

Der Abstand A1 zwischen zwei benachbarten Ultraschallwandlern 12 der 1D-Ultraschallwandler-Einheit 10 gibt jeweils den Abstand von einer Mitte der Schallauskoppelschicht 26 des einen Ultraschallwandlers 12 zu einer Mitte der Schallauskoppelschicht 26 des anderen Ultraschallwandlers 12 an. Der Abstand A1 beträgt höchstens 10 cm oder höchstens 5 cm oder höchstens 2 cm.

In der Abbildung der Figur 2B ist eine Rückansicht des Gehäuses 22 eines der Ultraschallwandler 12 dargestellt. Ein Boden des Metallbechers 24 weist zwei Durchgangslöcher 30 auf, durch welche jeweils ein elektrischer Anschlusskontakt 32 aus einem Gehäuseinneren herausgeführt wird. Die elektrischen Anschlusskontakte 32 sind mittels einer Vergussmasse 34 gegen den Metallbecher 24 elektrisch isoliert.

Die 1D-Ultraschallwandler-Einheit 10 weist pro Ultraschallwandler einen Schallkanal 36 auf, wobei jeder Schallkanal eine Eingangsöffnung 38, einen Ausgangsöffnung 40 und eine Länge L1 von mindestens 3 cm und höchstens 20 cm aufweist. Die Eingangsöffnungen sind jeweils so vor oder um einen der Ultraschallwandler 12 angeordnet, dass der jeweilige Ultraschallwandler 12 in den Kanal 36 hinein abstrahlt.

Im dargestellten Ausführungsbeispiel reicht hierfür jeweils ein Ultraschallwandler 12 zumindest teilweise in den jeweils zugeordneten Schallkanal 36 hinein, so dass sich die Schallauskoppelschicht 26 vollständig innerhalb des jeweiligen Schallkanals 36 befindet. Ebenso ist es in einer nicht dargestellten Ausführungsform möglich, die Eingangsöffnung in einem geringen Abstand vor der Schallauskoppelschicht 26 oder beispielsweise an den Rand des Metallbechers angrenzend zu positionieren.

Jeweils zwei benachbarte Ausgangsöffnungen weisen einen Abstand A2 von Mitte der Ausgangsöffnung zu Mitte der Ausgangsöffnung von höchstens 5 cm oder höchstens 2 cm oder höchstens 0,5 cm auf. Erfindungsgemäß ist der Abstand A2 der Ausgangsöffnungen 40 jeweils kleiner oder gleich dem Abstand A1 der Eingangsöffnungen 38.

Eine Länge L1 von jeder Schallauskoppelschicht 26 bis zu der Ausgangsöffnung 40 des zugehörigen Schallkanals 36 beträgt ein ganzzahliges Vielfachen eines Achtels der Wellenlänge der Schallfrequenz.

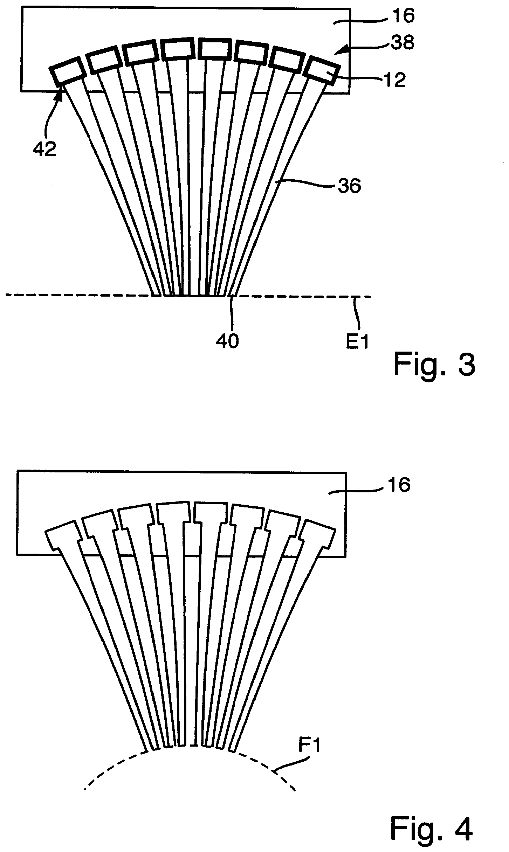

In den Abbildungen der Figuren 3 und 4 sind weitere erfindungsgemäße Ausführungsformen der Schallkanäle schematisch dargestellt. Im Folgenden werden jeweils die Unterschiede zu der Ausführungsform der Figur 1 bzw. der Figur 3 erläutert.

In dem in der Figur 3 dargestellten Ausführungsbeispiel verlaufen die Schallkanäle 36 so, dass die Ausgangsöffnungen 40 aller Schallkanäle 36 in einer gemeinsamen planen Ebene E1 liegen.

Ein sich an die Eingangsöffnung 38 jedes Schallkanals 36 anschließender Bereich des jeweiligen Schallkanals 36 ist so ausgebildet, dass der jeweils zugeordnete Ultraschallwandler 12 passgenau in den Schallkanal 36 hinein passt. Hierfür weist jeder Schallkanal 38 in dem Bereich einen dem Außendurchmesser D1 entsprechenden Innendurchmesser und eine als Anschlag dienende Kante 42 auf.

Die Eingangsöffnungen 38 mit den Ultraschallwandlers 12 sind jeweils so in der Trägerstruktur 16 angeordnet, dass die Ausgangsöffnungen 40 in der Ebene E1 liegen und die Länge L1 von jeder Schallauskoppelschicht 18 zu der zugeordneten Ausgangsöffnungen einem Vielfachen eines Achtels der Wellenlänge der Schallfrequenz beträgt.

In dem in der Figur 4 dargestellten Ausführungsbeispiel liegen die Ausgangsöffnungen 40 aller Schallkanäle 36 in einer konkav gekrümmten Fläche F1.

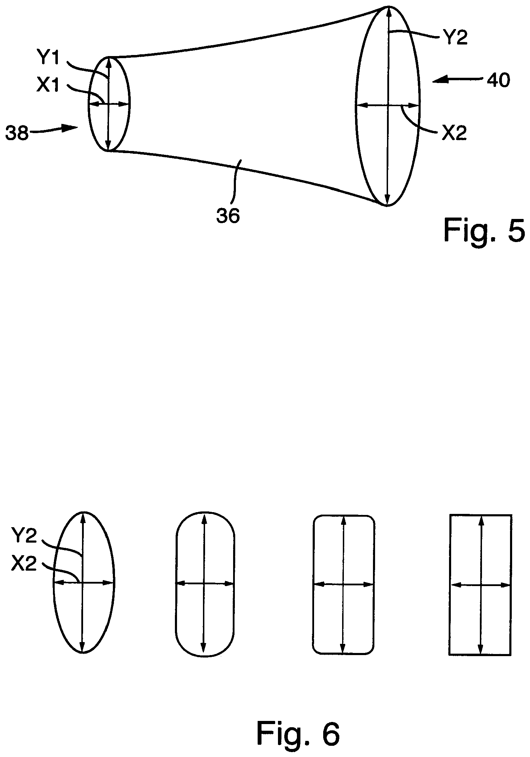

In der Abbildung der Figur 5 ist ein einzelner Schallkanal 36 schematisch dargestellt, wobei im Folgenden die Unterschiede gegenüber den Figuren 1 bis 4 erläutert werden.

Die Eingangsöffnung 38 weist eine Querschnittsfläche mit einer Breite x1 und einer Höhe y1 auf, die Ausgangsöffnung 40 eine Querschnittfläche mit einer Breite x2 und einer Höhe y2.

Die Eingangsöffnung ist kreisförmig ausgebildet, d.h. die Breite x1 und die Höhe y1 der Querschnittsfläche weisen denselben Wert auf. Die Ausgangsöffnung hat dagegen eine ovale Form, so dass die Breite x2 der Querschnittsfläche kleiner als die Breite y2 ist.

Bevorzugt ist die Breite x2 der Ausgangsöffnung 40 kleiner als die Breite x1 der Eingangsöffnung 38. Die Höhe y2 der Ausgangsöffnung 40 ist dagegen bevorzugt größer als die Höhe y1 der Eingangsöffnung 38.

Besonders bevorzugt gleicht der Höhenzuwachs des Schallkanals 36 die Abnahme der Breite des Schallkanals 36 so aus, dass der Flächeninhalt der Querschnittsfläche der Eingangsöffnung 38 dem Flächeninhalt der Querschnittsfläche der Ausgangsöffnung 40 entspricht.

Es versteht sich, dass die Breite x2 jeder Ausgangsöffnung 40 kleiner als die Wellenlänge der Schallfrequenz sein muss, um einen Abstand von der Mitte der Ausgansöffnungen 40 zu der Mitte einer unmittelbar benachbarten Ausgangsöffnung 40 von höchstens der Wellenlänge der Schallfrequenz realisieren zu können.

In der Abbildung der Figur 6 sind mehrere erfindungsgemäße Ausführungsbeispiele der Querschnittsflächen der Ausgangsöffnungen 40 schematisch dargestellt. Damit der Flächeninhalt der Querschnittsfläche der Ausgangsöffnung 40 dem Flächeninhalt der Querschnittsfläche der Eingangsöffnung 38 entspricht eignen sich insbesondere Formen die ein Verhältnis von Breite x2 zu Höhe y2 von ungefähr 1.5 aufweisen.

## Patentansprüche

1. 1D-Ultraschallwandler-Einheit (10) zur Erfassung von Objekten, Konturen oder Abständen, umfassend mindestens drei Ultraschallwandler (12) zur Erfassung von Objekten, Konturen oder Abständen und eine Steuereinheit, wobei
- die Steuereinheit (14) dazu ausgelegt ist, jeden Ultraschallwandler (12) einzeln anzusteuern,
- jeder Ultraschallwandler (12) jeweils ein Gehäuse (22), einen in dem Gehäuse (22) angeordneten piezoelektrischen Körper (18) und eine an einem offenen Ende des Gehäuses (22) angeordnete Schallauskoppelschicht (26) zum Auskoppeln von Schallwellen in ein gasförmiges Medium aufweist,
- jeder Ultraschallwandler (12) dazu ausgelegt ist, dieselbe Frequenz abzustrahlen und/oder zu empfangen,
- die Frequenz des Ultraschallwandlers (12) in einem Bereich von 20 kHz bis 400 kHz liegt,
- jeweils zwei zueinander unmittelbar benachbarte Ultraschallwandler (12) einen Abstand (A1) von Mitte der Schallauskoppelschicht (26) zu Mitte der Schallauskoppelschicht (26) von höchstens 10 cm oder höchstens 5 cm oder höchstens 2 cm aufweisen,
- die 1D-Ultraschallwandler-Einheit (10) pro Ultraschallwandler (12) einen Schallkanal (36) aufweist,
- jeder Schallkanal (36) eine Eingangsöffnung (38) mit einer ersten Querschnittsfläche und eine Ausgangsöffnung (40) mit einer zweiten Querschnittsfläche aufweist,
- jeder Schallauskoppelschicht (26) genau eine der Eingangsöffnungen (38) zugeordnet ist,
- die Ausgangsöffnungen entlang einer Linie angeordnet sind und
- ein Abstand (A2) von der Mitte einer der Ausgangsöffnung (40) zu der Mitte einer unmittelbar benachbarten Ausgangsöffnung (40) höchstens der Wellenlänge im gasförmigen Medium oder höchstens der Hälfte der Wellenlänge im gasförmigen Medium entspricht,
- wobei der Abstand (A2) zwischen zwei unmittelbar benachbarten Ausgangsöffnungen (40) jeweils kleiner dem Abstand (A1) der entsprechenden Eingangsöffnungen (38) ist und
- ein Quotient aus einem Flächeninhalt der Ausgangsöffnung (40) zu einem Flächeninhalt der Eingangsöffnung (38) einen Wert zwischen 0,30 und 1,2 aufweist,
- jeder Schallkanal (36) mindestens eine Länge des Durchmessers der Eingangsöffnung (38) besitzt,
**dadurch gekennzeichnet, dass**
jeder Schallkanal (36) entlang einer Geraden ausgebildet ist,
- die Ultraschallwandler (12) in einer gemeinsamen Trägerstruktur (16) eingelassen sind,
- die Ausgangsöffnungen (40) aller Schallkanäle (36) in einer gekrümmten Fläche (F1) oder die Ausgangsöffnungen (40) aller Schallkanäle (36) in einer gemeinsamen planen Ebene (E1) liegen, jeder Ultraschallwandler (12) eine auf einem Referenzpotential liegende elektromagnetische Abschirmung (20) aufweist
- das Gehäuse (22) jedes Ultraschallwandlers (12) einen zylinderförmigen Metallbecher (24) umfasst, und
- das Gehäuse (22) jedes Ultraschallwandlers (12) zwischen der Auskoppelschicht (26) und dem Metallbecher (24) eine Schallentkopplungsschicht (28) aufweist.

2. 1D-Ultraschallwandler-Einheit (10) nach Anspruch 1, **dadurch gekennzeichnet, dass** der Quotient des Flächeninhalts der Ausgangsöffnung (40) zu dem Flächeninhalt der Eingangsöffnung (38) einen Wert zwischen 0,35 und 1,0 oder zwischen 0,4 und 0,8 aufweist.

3. 1D-Ultraschallwandler-Einheit (10) nach Anspruch 1 oder 2, **dadurch gekennzeichnet, dass** eine Länge (L1) von der Schallauskoppelschicht (26) jedes Ultraschallwandlers (12) zu der Ausgangsöffnung (40) des zugeordneten Schallkanals (36) ein ganzzahliges Vielfaches eines Viertels der Wellenlänge im gasförmigen Medium oder ein ganzzahliges Vielfachen der halben Wellenlänge im gasförmigen Medium beträgt.

4. 1D-Ultraschallwandler-Einheit (10) nach einem der Ansprüche 1 oder 2, **dadurch gekennzeichnet, dass** jeder Schallkanal (36) aus einem Metall oder einem Kunststoff besteht oder ein Metall oder einen Kunststoff umfasst.

5. 1D-Ultraschallwandler-Einheit (10) nach einem der Ansprüche 1 oder 2, **dadurch gekennzeichnet, dass** jeder Ultraschallwandler (12) mit der Schallauskoppelschicht (26) voran in die zugeordnete Eingangsöffnung (38) hineinragt.

6. 1D-Ultraschallwandler-Einheit (10) nach Anspruch 5, **dadurch gekennzeichnet, dass** jeder Schallkanal (36) zumindest einen Teil des zugeordneten Ultraschallwandlers (12) passgenau aufnimmt.

7. 1D-Ultraschallwandler-Einheit (10) nach einem der Ansprüche 1 oder 2, **dadurch gekennzeichnet, dass** das Gehäuse (22) jedes Ultraschallwandlers (12) einen Durchmesser (D7) von mindestens 5 mm aufweist.

8. 1D-Ultraschallwandler-Einheit (10) nach einem der Ansprüche 1 oder 2, **dadurch gekennzeichnet, dass** sich die Elementanzahl erhöht, und sich 4 oder 5 oder 6 oder 8 oder 16 Ultraschallwandler (12) auf einer Linie befinden.

9. 1D-Ultraschallwandler-Einheit (10) nach Anspruch 3, **dadurch gekennzeichnet, dass** die jeweiligen Schallkanäle (36) die gleiche Länge L1 besitzen.

10. 1D-Ultraschallwandler-Einheit (10) nach Anspruch 3, **dadurch gekennzeichnet, dass** die Ultraschallwandler (12) in einer gemeinsamen planen Ebene liegen und damit die jeweiligen Schallkanäle (36) eine ungleiche Länge L1 besitzen.

11. 1D-Ultraschallwandler-Einheit (10) nach Anspruch 10, **dadurch gekennzeichnet, dass** eine Oberfläche der Schallauskoppelschicht (26), ein Rand des Metallbechers (24) und die dazwischen angeordnete Schallentkopplungsschicht (28) jedes einzelnen Ultraschallwandlers (12) jeweils eine plane Ebene aufspannen.

12. 1D-Ultraschallwandler-Einheit (10) nach einem der Ansprüche 1 bis 11, **dadurch gekennzeichnet, dass** das Gehäuse (22) jedes Ultraschallwandlers (12) mindestens der IP 40 Schutzart entsprechend ausgebildet ist.

13. 1D-Ultraschallwandler-Einheit (10) nach einem der Anspruch 1, **dadurch gekennzeichnet, dass** die Fläche (F1) konkav gekrümmt ist.

14. 1D-Ultraschallwandler-Einheit (10) nach einem der Ansprüche 1 bis 12 **dadurch gekennzeichnet, dass** die Ultraschallwandler (12) an den Eingangsöffnungen (38) entlang einer ersten Geraden und die Ausgangsöffnungen (40) der Schallkanäle (36) entlang einer zweiten Geraden angeordnet und die beiden Geraden zueinander parallel ausgebildet sind, wobei die Länge der zweiten Geraden wesentlich kleiner als die Länge der ersten Geraden ist.

15. 1D-Ultraschallwandler-Einheit (10) nach einem der Ansprüche 1 bis 12, **dadurch gekennzeichnet, dass** die Trägerstruktur (16) umfasst eine erste plane Ebene an einer ersten Stirnseite und eine zweite plane Ebene an einer zweiten Stirnseite der Trägerstruktur (16) auf, wobei die erste Stirnseite parallel zu der zweiten Stirnseite ausgebildet.

## Claims

1. 1D ultrasound transducer unit (10) for detecting objects, contours or distances, comprising at least three ultrasound transducers (12) for detecting objects, contours or distances and a control unit, wherein
- the control unit (14) is configured for individually controlling each ultrasound transducer (12),
- each ultrasound transducer (12) comprises a respective housing (22), a respective piezoelectric body (18) arranged in the housing (22) and a respective sound coupling-out layer (26), which is arranged at an open end of the housing (22), for coupling-out sound waves in a gaseous medium,
- each ultrasound transducer (12) is configured for the purpose of radiating and/or receiving the same frequency,
- the frequency of the ultrasound transducer (12) lies in a range of 20 kHz to 400 kHz,
- each two ultrasound transducers (12) directly adjacent to one another have a spacing (A1) from centre of the sound coupling-out layer (26) to centre of the sound coupling-out layer (26) of at most 10 cm or at most 5 cm or at most 2 cm,
- the 1D ultrasound transducer unit (10) has one sound channel (36) per ultrasound transducer (12),
- each sound channel (36) has an inlet opening (38) with a first cross-sectional area and an outlet opening with a second cross-sectional area,
- each sound coupling-out layer (26) is associated with exactly one of the inlet openings (38),
- the outlet openings are arranged along a line and
- a spacing (A2) from the centre of one of the outlet openings (40) to the centre of a directly adjacent outlet opening (40) corresponds with at most the wavelength in the gaseous medium or at most half the wavelength in the gaseous medium,
- wherein the spacing (A2) between each two directly adjacent outlet openings (40) is less than the spacing (A1) of the corresponding inlet openings (328) and
- a quotient of the area of the outlet opening (40) to the area of the inlet opening (38) has a value of between 0.30 and 1.2,
- each sound channel (36) has at least the length of the diameter of the inlet opening (38),
**characterised in that**
each sound channel (36) is formed along a straight line,
- the ultrasound transducers (12) are let into a common support structure (16),
- the outlet openings (40) of all sound channels (36) lie in a curved area (F1) or the outlet openings (40) of all sound channels (36) lie in a common planar plane (E1),
each ultrasound transducer (12) has an electromagnetic screen (20) lying at a reference potential,
- the housing (22) of each ultrasound transducer (12) comprises a cylindrical metal cup (24) and
- the housing (22) of each ultrasound transducer (12) has a sound decoupling layer (28) between the coupling-out layer (26) and the metal cup (24).

2. 1D ultrasound transducer unit (10) according to claim 1, **characterised in that** the quotient of the area of the outlet opening (40) to the area of the inlet opening (38) has a value of between 0.35 and 1.0 or between 0.4 and 0.8.

3. 1D ultrasound transducer unit (10) according to claim 1 or 2, **characterised in that** a length (L1) of the sound coupling-out layer (26) of each ultrasound transducer (12) from the outlet opening (40) of the associated sound channel (36) is an integral multiple of quarter of the wavelength in the gaseous medium or an integral multiple of half of the wavelength in the gaseous medium.

4. 1D ultrasound transducer unit (10) according to one of claims 1 and 2, **characterised in that** each sound channel (36) consists of a metal or a plastic or comprises a metal or a plastic.

5. 1D ultrasound transducer unit (10) according to one of claims 1 and 2, **characterised in that** each ultrasound transducer (12) projects by the sound coupling-out layer (26) forwardly into the associated inlet opening (38).

6. 1D ultrasound transducer unit (10) according to claim 5, **characterised in that** each sound channel (36) receives at least a part of the associated ultrasound transducer (12) in an exact fit.

7. 1D ultrasound transducer unit (10) according to one of claims 1 and 2, **characterised in that** the housing (22) of each ultrasound transducer (12) has a diameter (D7) of at least 5 mm.

8. 1D ultrasound transducer unit (10) according to one of claims 1 and 2, **characterised in that** the element number increases and 4 or 5 or 6 or 8 or 16 ultrasound transducers (12) are present in a line.

9. 1D ultrasound transducer unit (10) according to claim 3, **characterised in that** the respective sound channels (36) have the same length L1.

10. 1D ultrasound transducer unit (10) according to claim 3, **characterised in that** the ultrasound transducers (12) lie in a common planar plane and thus the respective sound channels (36) have an unequal length L1.

11. 1D ultrasound transducer unit (10) according to claim 10, **characterised in that** a surface of the sound coupling-out layer (26), an edge of the metal cup (24) and the sound decoupling layer (28) arranged therebetween of each individual ultrasound transducer (12) each span a planar plane.

12. 1D ultrasound transducer unit (10) according to any one of claims 1 to 11, **characterised in that** the housing (22) of each ultrasound transducer (12) is constructed in accordance with at least the IP 40 mode of protection.

13. 1D ultrasound transducer unit (10) according to [one of] claim 1, **characterised in that** the area (F1) is concavely curved.

14. 1D ultrasound transducer unit (10) according to any one of claims 1 to 12, **characterised in that** the ultrasound transducers (12) are arranged at the inlet openings (38) along a first straight line and the outlet openings (40) of the sound channels (36) are arranged along a second straight line and the two straight lines are formed to be parallel to one another, wherein the length of the second straight line is substantially smaller than the length of the first straight line.

15. 1D ultrasound transducer unit (10) according to any one of claims 1 to 12, **characterised in that** the support structure (16) has a first planar plane at a first end face and a second planar plane at a second end face of the support structure (16), wherein the first end face is formed to be parallel to the second end face.

## Revendications

1. Unité à transducteurs à ultrasons 1D (10) pour la détection d'objets, de contours ou de distances, comprenant trois transducteurs à ultrasons (12) pour la détection d'objets, de contours ou de distances et une unité de commande, dans laquelle
- l'unité de commande (14) est conçue pour contrôler individuellement chaque transducteur à ultrasons (12),
- chaque transducteur à ultrasons (12) comporte un boîtier (22), un corps piézoélectrique (18) disposé dans le boîtier (22) et une couche de découplage sonore (26) disposée à une extrémité ouverte du boîtier (22) pour le découplage d'ondes sonores dans un fluide gazeux,
- chaque transducteur à ultrasons (12) est conçu pour émettre et/ou pour recevoir la même fréquence,
- la fréquence du transducteur à ultrasons (12) est située sur une plage de 20 kHz à 400 kHz,
- deux transducteurs à ultrasons (12) immédiatement voisins entre eux présentent une distance (A1) du milieu de la couche de découplage sonore (26) au milieu de la couche de découplage sonore (26) de 10 cm maximum ou de 5 cm maximum ou de 2 cm maximum,
- l'unité à transducteurs à ultrasons 1D (10) présente un canal sonore (36) par transducteur à ultrasons (12),
- chaque canal sonore (36) présente un orifice d'entrée (38) doté d'une première surface de section transversale et un orifice de sortie (40) doté d'une deuxième surface de section transversale,
- à chaque couche de découplage sonore (26) est associé exactement un des orifices d'entrée (38),
les orifices de sortie sont disposés le long d'une ligne et
- la distance (A2) du milieu d'un des orifices de sortie (40) au milieu d'un orifice de sortie (40) immédiatement voisin correspond au maximum à la longueur d'onde dans le fluide gazeux ou au maximum à la moitié de la longueur d'onde dans le fluide gazeux,
- la distance (A2) entre deux orifices de sortie (40) immédiatement voisins étant inférieure à la distance (A1) des orifices d'entrée (38) correspondants et
- un quotient d'une surface de l'orifice de sortie (40) sur une surface de l'orifice d'entrée (38) présentant une valeur de 0,30 à 1,2, et
chaque canal sonore (36) possède au moins une longueur égale au diamètre de l'orifice d'entrée (38),
**caractérisée en ce que**
chaque canal sonore (36) est formé le long d'une droite,
- les transducteurs à ultrasons (12) sont insérés dans une structure porteuse (16) commune,
- les orifices de sortie (40) de tous les canaux sonores (36) se trouvent dans une surface courbe (F1) ou les orifices sortie (40) de tous les canaux sonores (36) se trouvent dans un plan commun (E1),
- le boîtier (22) de chaque transducteur à ultrasons (12) comprend un gobelet métallique (24) et
- le boîtier (22) de chaque transducteur à ultrasons (12) comporte une couche de découplage sonore (28) entre la couche de découplage (26) et le gobelet métallique (24).

2. Unité à transducteurs à ultrasons 1D (10) selon la revendication 1, **caractérisée en ce que** le quotient de la surface de l'orifice de sortie (40) sur la surface de l'orifice d'entrée (38) présente une valeur de 0,35 à 1,0 ou de 0,4 à 0,8.

3. Unité à transducteurs à ultrasons 1D (10) selon la revendication 1 ou 2, **caractérisée en ce qu'**une longueur (L1) de la couche de découplage sonore (26) de chaque transducteur à ultrasons (12) jusqu'à l'orifice de sortie (40) du canal sonore (36) associé est égale à un multiple entier d'un quart de la longueur d'onde dans le fluide gazeux ou à un multiple entier de la moitié de la longueur d'onde dans le fluide gazeux.

4. Unité à transducteurs à ultrasons 1D (10) selon une des revendications 1 ou 2, **caractérisée en ce que** chaque canal sonore (36) est en métal ou en matière plastique ou contient un métal ou une matière plastique.

5. Unité à transducteurs à ultrasons 1D (10) selon une des revendications 1 ou 2, **caractérisée en ce que** chaque transducteur à ultrasons (12) pénètre avec la couche de découplage sonore (26) dans l'orifice d'entrée (38) associé.

6. Unité à transducteurs à ultrasons 1D (10) selon la revendication 5, **caractérisée en ce que** chaque canal sonore (36) accueille exactement au moins une partie du transducteur à ultrasons (12) associé.

7. Unité à transducteurs à ultrasons 1D (10) selon une des revendications 1 ou 2, **caractérisée en ce que** le boîtier (22) de chaque transducteur à ultrasons (12) présente un diamètre (D7) d'au moins 5 mm.

8. Unité à transducteurs à ultrasons 1D (10) selon une des revendications 1 ou 2, **caractérisée en ce que** le nombre d'éléments augmente et que 4 ou 5 ou 6 ou 8 ou 16 transducteurs à ultrasons (12) se trouvent sur une ligne.

9. Unité à transducteurs à ultrasons 1D (10) selon la revendication 3, **caractérisée en ce que** les différents canaux sonores (36) possèdent la même longueur L1.

10. Unité à transducteurs à ultrasons 1D (10) selon la revendication 3, **caractérisée en ce que** les transducteurs à ultrasons (12) se trouvent dans un plan commun et que les différents canaux sonores (36) possèdent donc une longueur L1 différente.

11. Unité à transducteurs à ultrasons 1D (10) selon la revendication 10, **caractérisée en ce qu'**une face supérieure de la couche de découplage sonore (26), un bord du gobelet métallique (24) et la couche de découplage sonore (28) située entre les deux dans chaque transducteur à ultrasons (12) s'étendent chacun dans un plan.

12. Unité à transducteurs à ultrasons 1D (10) selon une des revendications 1 à 11, **caractérisée en ce que** le boîtier (22) de chaque transducteur à ultrasons (12) est construit au moins selon l'indice de protection IP 40.

13. Unité à transducteurs à ultrasons 1D (10) selon la revendication 1, **caractérisée en ce que** la surface (F1) est courbée de façon concave.

14. Unité à transducteurs à ultrasons 1D (10) selon une des revendications 1 ou 12, **caractérisée en ce que** les transducteurs à ultrasons (12) sont disposés au niveau des orifices d'entrée (38) le long d'une première droite et au niveau des orifices de sortie (40) des canaux sonores (36) le long d'une deuxième droite et que les deux droites sont parallèles entre elles, la longueur de la deuxième droite étant sensiblement inférieure à la longueur de la première droite.

15. Unité à transducteurs à ultrasons 1D (10) selon une des revendications 1 ou 12, **caractérisée en ce que** la structure porteuse (16) comprend un premier plan au niveau d'une première face frontale et un deuxième plan au niveau d'une deuxième face frontale de la structure porteuse (16), la première face frontale étant parallèle à la deuxième face frontale.
